# DEMANDE DE BREVET EUROPEEN

(11) **EP 4 772 434 A1**
(43) Date de publication de la demande: **08.07.2026**
(21) Numéro de dépôt: 26150133.2
(22) Date de dépôt: 05.01.2026
(51) Int. Cl.: B64C 1/18

(54) **PLANCHER D'AÉRONEF COMPRENANT AU MOINS UN SYSTÈME DE RACCORDEMENT OPTIMISÉ POUR RELIER UN RAIL LONGITUDINAL ET UNE POUTRE TRANSVERSALE**

(30) Priorité: 07.01.2025 FR 2500107
(71) Demandeur: AIRBUS OPERATIONS (S.A.S.), 31060 Toulouse (FR)
(72) Inventeur: ORTEU, Benoit, TOULOUSE (FR); AZZHIRI, Ahmed, TOULOUSE (FR); MIL, Ludovic, TOULOUSE (FR); PEYRICHOU, Vincent, TOULOUSE (FR)
(74) Mandataire: Airbus-OPS SAS

(57) **Abrégé**

L'invention a pour objet un plancher comprenant au moins un système de raccordement (60) reliant des premier et deuxième tronçons (58.1, 58.2) d'un rail longitudinal (52) ainsi qu'une poutre transversale (54) située entre les premier et deuxième tronçons (58.1, 58.2). Ce système de raccordement (60) comprend :
- des première et deuxième demi-éclisses (64), solidaires respectivement des premier et deuxième tronçons (58.1, 58.2), qui traversent la poutre transversale (54) via un premier orifice (66),
- des premiers éléments de fixation (70) reliant les première et deuxième demi-éclisses (64),
- au moins une équerre en L (76) présentant une première aile (76.1) solidaire de la poutre transversale (54) et une deuxième aile (76.2),
- au moins un deuxième élément de fixation (80) reliant la deuxième aile (76.2) de l'équerre en L (76) et les première et deuxième demi-éclisses (64).

## Description

La présente demande se rapporte à un plancher d'aéronef comprenant au moins un système de raccordement optimisé pour relier un rail longitudinal et une poutre transversale ainsi qu'à un aéronef comprenant au moins un tel plancher.

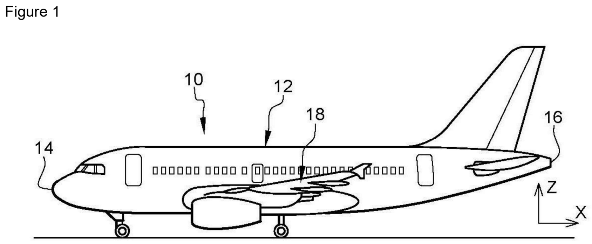

Selon un mode de réalisation visible sur la figure 1, un aéronef 10 comprend un fuselage 12 qui s'étend selon une direction longitudinale X entre des pointes avant et arrière 14, 16 ainsi que des ailes 18 positionnées de part et d'autre du fuselage 12.

Pour la suite de la description, un plan longitudinal vertical est parallèle à la direction longitudinale X et vertical lorsque l'aéronef est au sol. Un plan transversal est un plan perpendiculaire à la direction longitudinale X. Une direction transversale Y est une direction perpendiculaire à la direction longitudinale X et horizontale lorsque l'aéronef est au sol. Une direction verticale Z est perpendiculaire aux directions longitudinale et transversale X, Y.

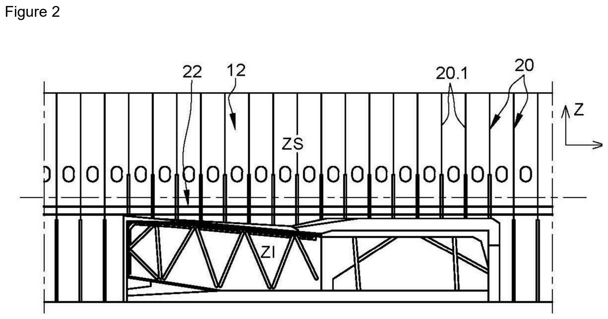

Selon un mode de réalisation visible sur la figure 2, le fuselage 12 comprend une ossature de fuselage 20, constituée de renforts transversaux 20.1 (également appelés cadres) et de renforts longitudinaux (également appelés lisses), sur laquelle est rapportée une paroi formant la peau du fuselage 12.

L'aéronef 10 comprend également un plancher 22, sensiblement horizontal et relié à l'ossature de fuselage 20 (plus particulièrement aux renforts transversaux 20.1), qui scinde le fuselage 12 en une zone supérieure ZS située au-dessus du plancher 22 et une zone inférieure ZI située au-dessous du plancher 22.

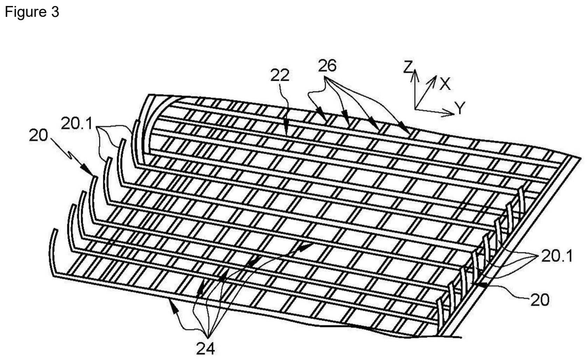

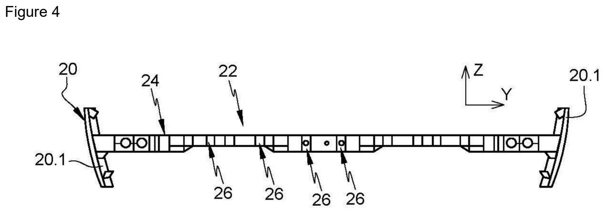

Comme illustré sur la figure 3, le plancher 22 comprend plusieurs poutres transversales 24 sensiblement parallèles à la direction transversale Y ainsi que plusieurs rails longitudinaux 26 sensiblement parallèles à la direction longitudinale X. Comme illustré sur la figure 4, les poutres transversales 24 sont reliées aux renforts transversaux 20.1 de l'ossature de fuselage 20. Pour obtenir un plancher 22 compact en hauteur, les poutres transversales 24 et les rails longitudinaux 26 sont positionnés approximativement dans un même plan et interfèrent les unes avec les autres.

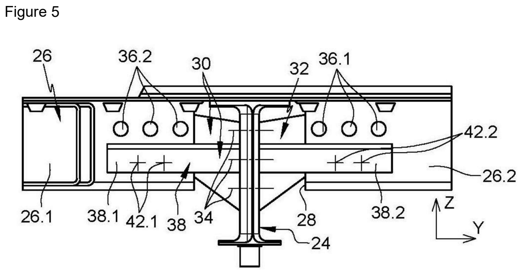

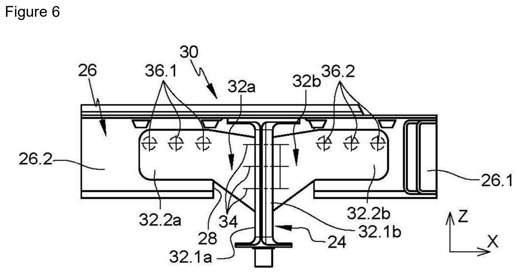

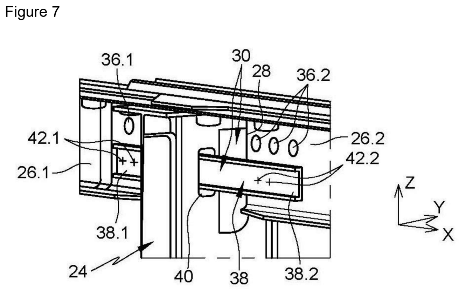

Par conséquent, comme illustré sur les figures 5 à 7, les rails longitudinaux 26 comprennent des découpes 28 pour permettre le passage des poutres transversales 24. En complément, le plancher 22 comprend, au niveau d'une zone d'intersection d'une poutre transversale 24 et d'un rail longitudinal 26, un système de raccordement 30 permettant d'assurer une continuité mécanique entre les deux tronçons 26.1, 26.2 du rail longitudinal 26 positionnés de part et d'autre de la découpe 28 et de relier les tronçons 26.1, 26.2 du rail longitudinal 26 et la poutre transversale 24.

Selon un mode de réalisation de l'art antérieur, le système de raccordement 30 comprend au moins deux éclisses de cisaillement 32a, 32b en L configurée pour assurer un transfert des efforts de cisaillement verticaux du rail longitudinal 26 vers la poutre transversale 24. Les deux éclisses de cisaillement 32a, 32b sont positionnées de part et d'autre de la poutre transversale 24 et comprennent chacune une première aile 32.1a, 32.1b plaquée contre la poutre transversale 24 et reliée à cette dernière par des éléments de fixation 34 comme des rivets ou des boulons par exemple. La première éclisse 32a comprend une deuxième aile 32.2a plaquée contre l'âme du premier tronçon 26.1 du rail longitudinal 26 et reliée au premier tronçon 26.1 grâce à plusieurs éléments de fixation 36.1 comme des rivets ou des boulons par exemple. La deuxième demi-éclisse 32b comprend une deuxième aile 32.2b plaquée contre l'âme du deuxième tronçon 26.2 du rail longitudinal 26 et reliée au deuxième tronçon 26.2 grâce à plusieurs éléments de fixation 36.2 comme des rivets ou des boulons par exemple.

En complément, le système de raccordement 30 comprend une éclisse de flexion 38 pour renforcer la raideur du rail longitudinal 26, qui traverse la poutre transversale 24 via un orifice 40 et présente des première et deuxième extrémités 38.1, 38.2 qui peuvent respectivement être reliées aux premier et deuxième tronçons 26.1, 26.2 du rail longitudinal 26 par des éléments de fixation 42.1, 42.2 comme des rivets ou des boulons par exemple.

Ce système de raccordement 30 comprend un grand nombre d'éléments de fixation 36.1, 36.2, 42.1, 42.2.

Pour assembler chaque éclisse de cisaillement 32 et l'éclisse de flexion 38, il est nécessaire pour chaque élément de fixation 36.1, 36.2, 42.1, 42.2 de prépositionner l'éclisse de cisaillement ou de flexion 32, 38 sur le rail longitudinal 26, de percer ladite éclisse de cisaillement ou de flexion 32, 38 et le rail longitudinal 26 puis de mettre en place l'élément de fixation 36.1, 36.2, 42.1, 42.2 dans les perçages. Compte tenu du grand nombre d'éléments de fixation, l'assemblage de chaque système de raccordement 30 est relativement long.

Par ailleurs, dans la mesure où chaque éclisse de cisaillement ou de flexion 32, 38 traverse la poutre transversale 24 et qu'elle est reliée à chacune de ses extrémités aux premier et deuxième tronçons 26.1, 26.2 d'un rail longitudinal 26, les orifices pour les éléments de fixation ne peuvent pas être pré-percés et le montage de chaque système de raccordement 30 ne peut se faire que sur la chaîne d'assemblage, ce qui tend à augmenter le temps d'assemblage sur ladite chaîne d'assemblage.

La présente invention vise à remédier à tout ou partie des inconvénients de l'art antérieur.

A cet effet, l'invention a pour objet un plancher comprenant des rails longitudinaux parallèles à une première direction, des poutres transversales parallèles à une deuxième direction, au moins un des rails longitudinaux interférant avec au moins une des poutres longitudinales et comprenant au moins des premier et deuxième tronçons positionnés de part et d'autre d'une découpe laissant passer la poutre transversale, le plancher comprenant au moins un système de raccordement qui relie les premier et deuxième tronçons du rail longitudinal ainsi que la poutre transversale.

Selon l'invention, le système de raccordement comprend :
a. une première demi-éclisse, solidaire du premier tronçon, qui traverse la poutre transversale via un premier orifice,
b. une deuxième demi-éclisse, solidaire du deuxième tronçon, qui traverse la poutre transversale via le premier orifice ou un deuxième orifice,
c. des premiers éléments de fixation, reliant les première et deuxième demi-éclisses, positionnés de part et d'autre de la poutre transversale,
d. au moins une équerre en L présentant une première aile solidaire de la poutre transversale et une deuxième aile,
e. au moins un deuxième élément de fixation reliant la deuxième aile de l'équerre en L et les première et deuxième demi-éclisses.

Le fait de prévoir des demi-éclisses reliées uniquement à l'un ou l'autre des premier et deuxième tronçons du rail longitudinal permet de relier chaque demi-éclisse à un premier ou deuxième tronçon d'un rail longitudinal avant sa mise en place au niveau du plancher, et ce en dehors de la chaîne d'assemblage. Ainsi, cette solution permet de réduire le nombre d'éléments de fixation à mettre en place au niveau de la chaîne d'assemblage.

Selon une autre caractéristique, la première demi-éclisse est plaquée contre une première face du premier tronçon, la deuxième demi-éclisse étant plaquée contre une deuxième face du deuxième tronçon opposée à la première face du premier tronçon.

Selon une autre caractéristique, les premier et deuxième orifices ne forment qu'un même et unique orifice.

Selon une autre caractéristique, le système de raccordement comprend des première et deuxième équerres en L positionnées de part et d'autre de la poutre transversale, la première aile de la première équerre en L étant plaquée contre une première face de la poutre transversale et reliée à cette dernière, la première aile de la deuxième équerre en L étant plaquée contre une deuxième face de la poutre transversale et reliée à cette dernière.

Selon une autre caractéristique, le système de raccordement comprend au moins une cale entre la deuxième aile de la première ou deuxième équerre en L et la deuxième demi-éclisse. Cette caractéristique permet de régler le rail longitudinal selon la direction transversale.

Selon une autre caractéristique, les premiers et deuxièmes éléments de fixation sont positionnés au niveau de la découpe, de part et d'autre de la poutre transversale.

Selon une autre caractéristique, les premiers et deuxièmes éléments de fixation sont confondus et relient les première et deuxième demi-éclisses entre elles et chaque équerre en L aux première et deuxième demi-éclisses.

Selon une autre caractéristique, chacun des premier et deuxième tronçons du rail longitudinal comprend au moins une âme ainsi qu'au moins une semelle supérieure réalisée d'un seul tenant avec l'âme et positionnée à l'extrémité supérieure de l'âme. En complément, le système de raccordement comprend au moins une semelle de jonction reliant les semelles supérieures des premier et deuxième tronçons du rail longitudinal.

Selon une autre caractéristique, le système de raccordement comprend au moins un élément de liaison reliant la semelle de jonction et la poutre transversale.

Selon une autre caractéristique, la poutre transversale comprend au moins une âme ainsi qu'au moins une semelle supérieure réalisée d'un seul tenant avec l'âme et positionnée à l'extrémité supérieure de l'âme. En complément, le système de raccordement comprend au moins une cale intercalée entre la semelle supérieure de la poutre transversale et la semelle supérieur du rail longitudinal. Cette caractéristique permet de régler le rail longitudinal selon la direction verticale.

Selon une autre caractéristique, la première ou deuxième demi-éclisse est une plaque qui comprend :
a. une première partie solidaire d'un tronçon support parmi les premier et deuxième tronçons et positionnée d'un premier côté de la poutre transversale, qui présente une première hauteur,
b. une deuxième partie en contact avec un tronçon de contact différent du tronçon support parmi les premier et deuxième tronçons et positionnée d'un deuxième côté de la poutre transversale, qui présente une deuxième hauteur inférieure à la première hauteur.

Selon une autre caractéristique, chacun des premier et deuxième tronçons du rail longitudinal comprend au moins une âme ainsi que des semelles supérieure et inférieure aux extrémités supérieure et inférieure de l'âme. En complément, la deuxième partie est en contact avec la semelle inférieure du tronçon de contact et espacée de la semelle supérieure de ce tronçon de contact.

L'invention a également pour objet un aéronef comprenant au moins un plancher selon l'une des caractéristiques précédentes ainsi qu'un procédé d'assemblage d'un système de raccordement d'un plancher qui comprend :
a. une étape de prémontage de chaque équerre en L sur la poutre transversale,
b. une étape de positionnement, au niveau du plancher, du premier tronçon du rail longitudinal,
c. une étape de positionnement, au niveau du plancher, du deuxième tronçon du rail longitudinal,
d. une étape de montage des première et deuxième demi-éclisses sur les premier et deuxième tronçons du rail longitudinal,
e. si besoin une étape d'ajustement du positionnement par calage des premier et deuxième tronçons du rail longitudinal par rapport à la poutre transversale, verticalement et/ou transversalement,
f. une étape de perçage d'un orifice traversant pour chacun des premiers et deuxièmes éléments de fixation,
g. une étape de mise en place des premiers et deuxièmes éléments de fixation de manière à relier les première et deuxième demi-éclisses ainsi que chaque équerre en L du système de raccordement.

D'autres caractéristiques et avantages ressortiront de la description de l'invention qui va suivre, description donnée à titre d'exemple uniquement, en regard des dessins annexés parmi lesquels :
[Fig. 1] est une vue latérale d'un aéronef,
[Fig. 2] est une coupe longitudinale schématique d'une partie d'un fuselage d'un aéronef,
[Fig. 3] est une vue en perspective d'un plancher d'aéronef illustrant un mode de réalisation de l'art antérieur,
[Fig. 4] est une vue de face d'une poutre transversale d'un plancher d'aéronef illustrant un mode de réalisation de l'art antérieur,
[Fig. 5] est une vue d'un premier côté d'un système d'assemblage reliant un rail longitudinal et une poutre transversale illustrant un mode de réalisation de l'art antérieur,
[Fig. 6] est une vue d'un deuxième côté du système d'assemblage visible sur la figure 5,
[Fig. 7] est une vue en perspective du système d'assemblage visible sur la figure 5,
[Fig. 8] est une vue en perspective d'un plancher d'aéronef illustrant un mode de réalisation de l'invention,
[Fig. 9] est une vue de face d'une poutre transversale d'un plancher d'aéronef illustrant un mode de réalisation de l'invention,

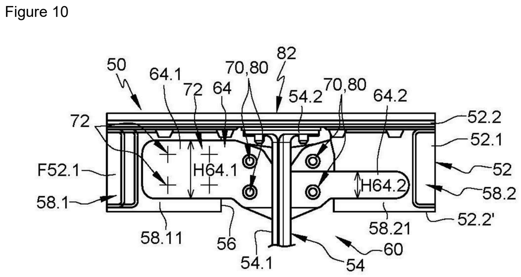

[Fig. 10] est une vue d'un premier côté d'un système d'assemblage reliant une poutre transversale et un rail longitudinal illustrant un mode de réalisation de l'invention,

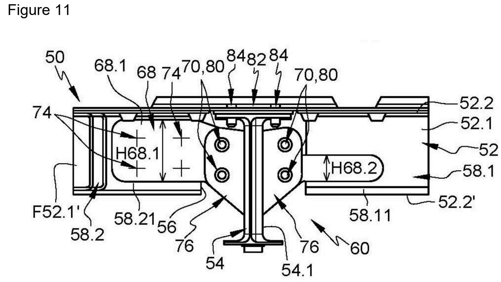

[Fig. 11] est une vue d'un deuxième côté du système d'assemblage visible sur la figure 10,

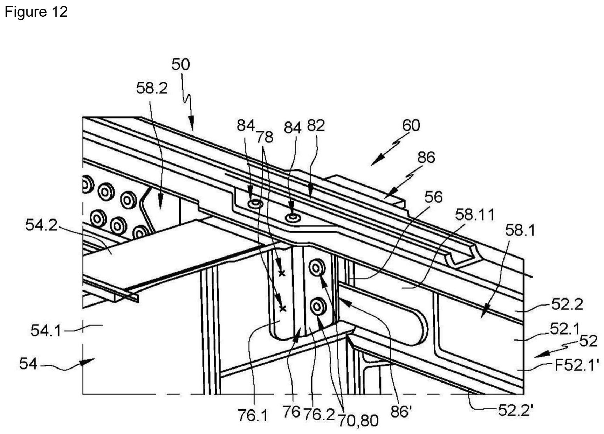

[Fig. 12] est une vue en perspective selon un premier angle de vue du système d'assemblage visible sur la figure 10,

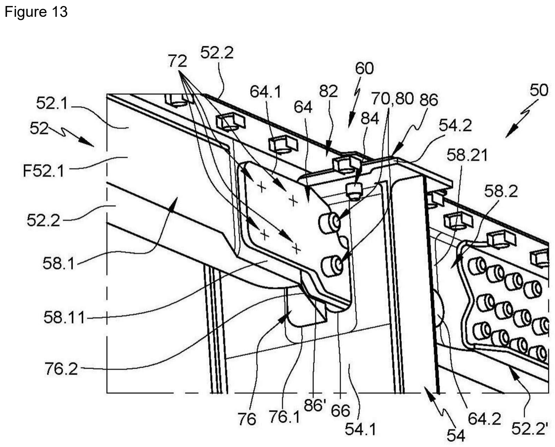

[Fig. 13] est une vue en perspective selon un deuxième angle de vue du système d'assemblage visible sur la figure 10.

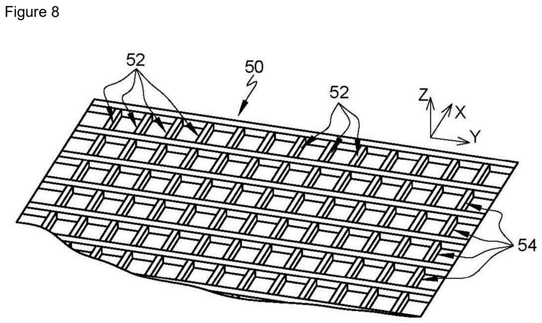

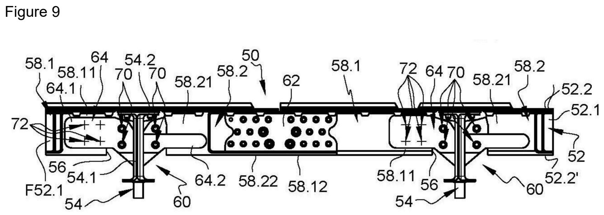

Selon un mode de réalisation visible sur les figures 8 et 9, un plancher 50 d'aéronef comprend des rails longitudinaux 52 parallèles à une première direction dite longitudinale X ainsi que des poutres transversales 54 parallèles à une deuxième direction dite transversale Y. Les rails longitudinaux X et les poutres transversales 54 sont positionnés entre deux plans horizontaux. Au moins un des rails longitudinaux 52 interfère avec au moins une des poutres longitudinales 54 et comprend une découpe 56 pour laisser passer la poutre transversale 54 ainsi qu'au moins des premier et deuxième tronçons 58.1, 58.2 positionnés de part et d'autre de la découpe 56, le premier tronçon 58.1 comprenant une première extrémité 58.11 jouxtant la découpe 56 et une deuxième extrémité 58.12 opposée à la première extrémité 58.11, le deuxième tronçon 58.2 comprenant une première extrémité 58.21 jouxtant la découpe 56 et une deuxième extrémité 58.22 opposée à la première extrémité 58.21. En complément, le plancher 50 comprend au moins un système de raccordement 60 reliant les premier et deuxième tronçons 58.1, 58.2 du rail longitudinal 52 ainsi que la poutre transversale 54. Selon un agencement, plusieurs rails longitudinaux 52 interfèrent chacun avec plusieurs poutres transversales 54 et le plancher 50 comprend plusieurs systèmes de raccordement 60 au niveau de chaque intersection entre un rail longitudinal 52 et une poutre transversale 54.

Selon une application, un aéronef comprend au moins un tel plancher 50 positionné dans son fuselage, au-dessus de son caisson central de voilure. Selon cette application, les poutres transversales 54 présentent des extrémités reliées à la structure du fuselage.

Selon une configuration, chaque poutre transversale 54 comprend au moins une âme 54.1 verticale positionnée dans un plan transversal ainsi qu'au moins une semelle supérieure 54.2, réalisée d'un seul tenant avec l'âme 54.1, positionnée dans un plan horizontal et à l'extrémité supérieure de l'âme 54.1. Selon un mode de réalisation, au moins une poutre transversale 54 comprend deux âmes 54.1 plaquées l'une contre l'autre.

Selon une configuration, chaque tronçon 58.1, 58.2 d'un rail longitudinal 52 comprend au moins une âme 52.1 verticale positionnée dans un plan longitudinal vertical ainsi qu'au moins une semelle supérieure 52.2, réalisée d'un seul tenant avec l'âme 52.1, positionnée dans un plan horizontal et à l'extrémité supérieure de l'âme 52.1. Selon un mode de réalisation, chaque tronçon 58.1, 58.2 d'un rail longitudinal 52 comprend au moins une âme 52.1 ainsi que des semelles supérieure et inférieure 52.2, 52.2' aux extrémités supérieure et inférieure de l'âme 52.1. Au moins un rail longitudinal 52 peut comprendre deux âmes 52.1. Chaque âme 52.1 comprend des première et deuxième faces F52.1, F52.1' opposées.

Les semelles supérieures 52.2, 54.2 des rails longitudinaux 52 et des poutres transversales 54 sont approximativement coplanaires ou très légèrement décalées selon la direction verticale Z.

Selon une configuration visible sur la figure 9, les deuxièmes extrémités 58.12, 58.22 des premier et deuxième tronçons 58.1, 58.2 d'un rail longitudinal 52 sont reliées entre elles grâce à au moins une éclisse 62 positionnée entre deux poutres transversales 54 successives.

Selon une caractéristique de l'invention, au moins un des systèmes de raccordement 60 comprend une première demi-éclisse 64 solidaire du premier tronçon 58.1, plus particulièrement de sa première extrémité 58.11, qui traverse la poutre transversale 54 via un premier orifice 66 traversant ladite poutre transversale 54, une deuxième demi-éclisse 68 solidaire du deuxième tronçon 58.2, plus particulièrement de sa première extrémité 58.21, qui traverse la poutre transversale 54 via un deuxième orifice 66 (qui peut être le premier orifice ou un orifice distinct) traversant ladite poutre transversale 54 ainsi que des premiers éléments de fixation 70, reliant les première et deuxième demi-éclisses 64, 68, positionnés de part et d'autre de la poutre transversale 54.

Selon une configuration, la première demi-éclisse 64 est plaquée contre la première face F52.1 de l'âme 52.1 du premier tronçon 58.1 et la deuxième demi-éclisse 68 est plaquée contre la deuxième face F52.1' de l'âme 52.1 du deuxième tronçon 58.2. Les premier et deuxième orifices 66 ne forment qu'un même et unique orifice.

La découpe 56 est dimensionnée de telle sorte que les premiers éléments de fixation 70 soient positionnés au niveau de la découpe 56 de manière à ne pas traverser les premier et deuxième tronçons 58.1, 58.2.

La première ou deuxième demi-éclisse 64, 68 est une plaque qui comprend une première partie 64.1, 68.1 solidaire d'un tronçon support parmi les premier et deuxième tronçons 58.1, 58.2 et positionnée d'un premier côté de la poutre transversale 54 ainsi qu'une deuxième partie 64.2, 68.2 en contact avec un tronçon de contact différent du tronçon support parmi les premier et deuxième tronçons 58.1, 58.2 et positionnée d'un deuxième côté de la poutre transversale 54. La première partie 64.1, 68.1 de la première ou deuxième demi-éclisse 64, 68 est plaquée contre l'âme 52.1 du tronçon support 58.1, 58.2 et reliée à ce dernier par au moins un système de liaison 72, 74 de préférence démontable, comme des boulons ou des rivets par exemple. L'invention n'est pas limitée à ce type de système de liaison.

La deuxième partie 64.2, 68.2 de la première ou deuxième demi-éclisse 64, 68 est plaquée contre l'âme 52.1 du tronçon de contact 58.1, 58.2 et n'est pas reliée à ce dernier.

Selon une configuration, la première partie 64.1, 68.1 de la première ou deuxième demi-éclisse 64, 68 présente une première hauteur H64.1, H68.1 sensiblement égale à la hauteur de l'âme 52.1 (distance entre les semelles supérieure et inférieure 52.2, 52.2') du tronçon support 58.1, 58.2 de manière à être intercalée sans jeu entre les semelles supérieure et inférieure 52.2, 52.2' du tronçon support 58.1, 58.2. Selon cette configuration, la première ou deuxième demi-éclisse 64, 68 est parfaitement immobilisée verticalement dans les deux sens (du bas vers le haut et du haut vers le bas) par rapport au tronçon support 58.1, 58.2. La deuxième partie 64.2, 68.2 de la première ou deuxième demi-éclisse 64, 68 présente une deuxième hauteur H64.2, H68.2 nettement inférieure à la première hauteur H64.1, H68.1 et à la hauteur de l'âme 52.1 (distance entre les semelles supérieure et inférieure 52.2, 52.2') du tronçon de contact 58.1, 58.2 pour permettre à cette deuxième partie 64.2, 68.2 de passer à travers l'orifice 66. Cette deuxième partie 64.2, 68.2 est en contact avec la semelle inférieure 52.2' du tronçon de contact 58.1, 58.2 et espacée de la semelle supérieure 52.2 de ce tronçon de contact 58.1, 58.2. Selon cette configuration, la première ou deuxième demi-éclisse 64, 68 est en appui contre la semelle inférieure 52.2' du tronçon de contact 58.1, 58.2.

Le fait de prévoir des demi-éclisses 64, 68 reliées uniquement à l'un ou l'autre des premier et deuxième tronçons 58.1, 58.2 du rail longitudinal 52 permet de relier chaque demi-éclisse 64, 68 à un premier ou deuxième tronçon 58.1, 58.2 d'un rail longitudinal 52 avant sa mise en place au niveau du plancher 50, et ce en dehors de la chaîne d'assemblage. Par ailleurs, les orifices traversants prévus pour les systèmes de liaison 72, 74 reliant les demi-éclisses 64, 68 aux tronçons 58.1, 58.2 des rails longitudinaux 52 peuvent être pré-percés.

Le système de raccordement 60 comprend au moins une équerre en L 76 présentant une première aile 76.1 solidaire de la poutre transversale 54 et reliée à cette dernière par au moins un système de liaison 78, une deuxième aile 76.2 ainsi qu'au moins un deuxième élément de fixation 80, reliant la deuxième aile 76.2 de l'équerre en L 76 et les première et deuxième demi-éclisses 64, 68, positionné au niveau de la découpe 56.

Selon un mode de réalisation, le système de raccordement 60 comprend des première et deuxième équerres en L 76 positionnées de part et d'autre de la poutre transversale 54. La première aile 76.1 de la première équerre en L 76 est plaquée contre une première face de l'âme 54.1 de la poutre transversale 54 et reliée à cette dernière par au moins un système de liaison 78. La première aile 76.1 de la deuxième équerre en L 76 est plaquée contre une deuxième face de l'âme 54.1 de la poutre transversale 54 et reliée à cette dernière par au moins un système de liaison 78. Selon une configuration privilégiée, le système de liaison 78 est commun aux première et deuxième équerres en L 76 et permet de reliées les premières ailes 76.1 des première et deuxième équerres en L 76 à la poutre transversale 54. A titre d'exemple, le système de liaison 78 comprend plusieurs boulons ou rivets traversant les premières ailes 76.1 des première et deuxième équerres en L 76 et la poutre transversale 54. Selon un mode d'assemblage, la poutre transversale 54 et les première et deuxième équerres en L 76 sont pré-percées pour permettre la mise en place des boulons du système de liaison 78, les première et deuxième équerres en L 76 étant prémontées et fixées sur la poutre transversale 54 avant la mise en place de cette dernière au niveau du plancher 50.

Selon un mode de réalisation, les premiers et deuxièmes éléments de fixation 70, 80 sont confondus et relient les première et deuxième demi-éclisses 64, 68 entre elles et chaque équerre en L 76 aux première et deuxième demi-éclisses 64, 68. Ainsi, au moins un premier ou deuxième élément de fixation 70, 80 est positionné d'un premier côté de la poutre transversale 54 pour relier la deuxième aile 76.2 de la première équerre en L 76 et les première et deuxième demi-éclisses 64, 68. En parallèle, au moins un premier ou deuxième élément de fixation 70, 80 est positionné d'un deuxième côté de la poutre transversale 54 pour relier la deuxième aile 76.2 de la deuxième équerre en L 76 et les première et deuxième demi-éclisses 64, 68. Cette solution permet de réduire le nombre d'éléments de fixation 70, 80 à mettre en place lors de l'assemblage des rails longitudinaux 52 au niveau du plancher 50. Selon un mode de réalisation, le système de raccordement 60 comprend uniquement quatre éléments de fixation 70, 80. Ainsi, le nombre de perçages à réaliser, sur la chaîne d'assemblage, lors de l'assemblage du rail longitudinal 50 est limité à quatre.

Selon un mode de réalisation, le système de raccordement 60 comprend au moins une semelle de jonction 82 reliant les semelles supérieures 52.2 des premier et deuxième tronçons 58.1, 58.2 du rail longitudinal 52. Selon une configuration, la semelle de jonction 82 du rail longitudinal 52 est positionnée au-dessus de la semelle supérieure 54.2 de la poutre transversale 54. Selon un mode de réalisation, le système de raccordement 60 comprend au moins un élément de liaison 84, comme un boulon ou un rivet par exemple, reliant la semelle de jonction 82 et la poutre transversale 54.

Le système de raccordement 60 peut comprendre au moins une cale 86 intercalée entre la semelle supérieure 54.2 de la poutre transversale 54 et la semelle supérieure 52.2 du rail longitudinal 52 et/ou au moins une cale 86' entre la deuxième aile 76.2 de la première ou deuxième équerre en L 76 et la deuxième demi-éclisse 68. La première cale 86 permet de régler le rail longitudinal 52 selon la direction verticale. La deuxième cale 86' permet de régler le rail longitudinal selon la direction transversale.

Selon un mode opératoire, un procédé d'assemblage d'un système de raccordement 60 d'un plancher comprend une étape de prémontage de chaque équerre en L 76 sur la poutre transversale 54, une étape de positionnement, au niveau du plancher 50, du premier tronçon 58.1 du rail longitudinal 52, une étape de positionnement, au niveau du plancher 50, du deuxième tronçon 58.2 du rail longitudinal 52, une étape de montage des première et deuxième demi-éclisses 64, 68 sur les premier et deuxième tronçons 58.1, 58.2 du rail longitudinal 52, une étape d'assemblage de la semelle de jonction 82 de manière à relier les premier et deuxième tronçons 58.1, 58.2, si besoin une étape d'ajustement du positionnement par calage des premier et deuxième tronçons 58.1, 58.2 du rail longitudinal 52 par rapport à la poutre transversale 54 verticalement, en positionnant éventuellement une cale 86 entre la semelle supérieure 52.2 du rail longitudinal 52 et la semelle supérieure 54.2 de la poutre transversale 54, et/ou transversalement, en positionnant au moins une cale 86' entre la deuxième aile 76.2 de la première ou deuxième équerre en L 76 et la deuxième demi-éclisse 68, une étape de perçage d'un orifice traversant pour chacun des premiers et deuxièmes éléments de fixation 70, 80 puis une étape de mise en place des premiers et deuxièmes éléments de fixation 70, 80 de manière à relier les première et deuxième demi-éclisses 64, 68 ainsi que chaque équerre en L 76 du système de raccordement 60.

Le système de raccordement 60 de l'invention présente un faible nombre d'éléments de fixation 70, 80 à mettre en place sur la chaîne d'assemblage, ce qui permet de réduire le temps nécessaire pour l'assemblage de chaque système de raccordement 60 au niveau de la chaîne d'assemblage.

## Revendications

1. Plancher comprenant des rails longitudinaux (52) parallèles à une première direction (X), des poutres transversales (54) parallèles à une deuxième direction (Y), au moins un des rails longitudinaux (52) interférant avec au moins une des poutres longitudinales (54) et comprenant au moins des premier et deuxième tronçons (58.1, 58.2) positionnés de part et d'autre d'une découpe (56) laissant passer la poutre transversale (54), le plancher comprenant au moins un système de raccordement (60) reliant les premier et deuxième tronçons (58.1, 58.2) du rail longitudinal (52) ainsi que la poutre transversale (54) ; **caractérisé en ce que** le système de raccordement (60) comprend :
- une première demi-éclisse (64), solidaire du premier tronçon (58.1), qui traverse la poutre transversale (54) via un premier orifice (66),
- une deuxième demi-éclisse (68), solidaire du deuxième tronçon (58.2), qui traverse la poutre transversale (54) via le premier orifice (66) ou un deuxième orifice (66),
- des premiers éléments de fixation (70), reliant les première et deuxième demi-éclisses (64, 68), positionnés de part et d'autre de la poutre transversale (54),
- au moins une équerre en L (76) présentant une première aile (76.1) solidaire de la poutre transversale (54) et une deuxième aile (76.2),
- au moins un deuxième élément de fixation (80) reliant la deuxième aile (76.2) de l'équerre en L (76) et les première et deuxième demi-éclisses (64, 68).

2. Plancher selon la revendication 1, **caractérisé en ce que** la première demi-éclisse (64) est plaquée contre une première face (F52.1) du premier tronçon (58.1), la deuxième demi-éclisse (68) étant plaquée contre une deuxième face (F52.1') du deuxième tronçon (58.2) opposée à la première face (F52.1) du premier tronçon (58.1).

3. Plancher selon l'une des revendications précédentes, **caractérisé en ce que** les premier et deuxième orifices (66) ne forment qu'un même et unique orifice.

4. Plancher selon l'une des revendications précédentes, **caractérisé en ce que** le système de raccordement (60) comprend des première et deuxième équerres en L (76) positionnées de part et d'autre de la poutre transversale (54), la première aile (76.1) de la première équerre en L (76) étant plaquée contre une première face de la poutre transversale (54) et reliée à cette dernière, la première aile (76.1) de la deuxième équerre en L (76) étant plaquée contre une deuxième face de la poutre transversale (54) et reliée à cette dernière.

5. Plancher selon la revendication précédente, **caractérisé en ce que** le système de raccordement (60) comprend au moins une cale (86') entre la deuxième aile (76.2) de la première ou deuxième équerre en L (76) et la deuxième demi-éclisse (68).

6. Plancher selon l'une des revendications précédentes, **caractérisé en ce que** les premiers et deuxièmes éléments de fixation (70) sont positionnés au niveau de la découpe (56), de part et d'autre de la poutre transversale (54).

7. Plancher selon l'une des revendications précédentes, **caractérisé en ce que** les premiers et deuxièmes éléments de fixation (70, 80) sont confondus et relient les première et deuxième demi-éclisses (64, 68) entre elles et chaque équerre en L (76) aux première et deuxième demi-éclisses (64, 68).

8. Plancher selon l'une des revendications précédentes, **caractérisé en ce que** chacun des premier et deuxième tronçons (58.1, 58.2) du rail longitudinal (52) comprend au moins une âme (52.1) ainsi qu'au moins une semelle supérieure (52.2) réalisée d'un seul tenant avec l'âme (52.1) et positionnée à l'extrémité supérieure de l'âme (52.1) et **en ce que** le système de raccordement (60) comprend au moins une semelle de jonction (82) reliant les semelles supérieures (52.2) des premier et deuxième tronçons (58.1, 58.2) du rail longitudinal (52).

9. Plancher selon la revendication précédente, **caractérisé en ce que** le système de raccordement (60) comprend au moins un élément de liaison (84) reliant la semelle de jonction (82) et la poutre transversale (54).

10. Plancher selon l'une des revendications 8 à 9, **caractérisé en ce que** la poutre transversale (54) comprend au moins une âme (54.1) ainsi qu'au moins une semelle supérieure (54.2) réalisée d'un seul tenant avec l'âme (54.1) et positionnée à l'extrémité supérieure de l'âme (54.1) et **en ce que** le système de raccordement (60) comprend au moins une cale (86) intercalée entre la semelle supérieure (54.2) de la poutre transversale (54) et la semelle supérieure (52.2) du rail longitudinal (52).

11. Plancher selon l'une des revendications précédentes, **caractérisé en ce que** la première ou deuxième demi-éclisse (64, 68) est une plaque qui comprend :
- une première partie (64.1, 68.1) solidaire d'un tronçon support parmi les premier et deuxième tronçons (58.1, 58.2) et positionnée d'un premier côté de la poutre transversale (54), qui présente une première hauteur (H64.1, H68.1),
- une deuxième partie (64.2, 68.2) en contact avec un tronçon de contact différent du tronçon support parmi les premier et deuxième tronçons (58.1, 58.2) et positionnée d'un deuxième côté de la poutre transversale (54), qui présente une deuxième hauteur (H64.2, H68.2) inférieure à la première hauteur (H64.1, H68.1).

12. Plancher selon la revendication précédente, **caractérisé en ce que** chacun des premier et deuxième tronçons (58.1, 58.2) du rail longitudinal (52) comprend au moins une âme (52.1) ainsi que des semelles supérieure et inférieure (52.2, 52.2') aux extrémités supérieure et inférieure de l'âme (52.1) et **en ce que** la deuxième partie (64.2, 68.2) est en contact avec la semelle inférieure (52.2') du tronçon de contact (58.1, 58.2) et espacée de la semelle supérieure (52.2) de ce tronçon de contact (58.1, 58.2).

13. Aéronef comprenant au moins un plancher selon l'une des revendications précédentes.

14. Procédé d'assemblage d'un système de raccordement (60) d'un plancher selon l'une des revendications 1 à 12, **caractérisé en ce que** le procédé d'assemblage comprend :
- une étape de prémontage de chaque équerre en L (76) sur la poutre transversale (54),
- une étape de positionnement, au niveau du plancher (50), du premier tronçon (58.1) du rail longitudinal (52),
- une étape de positionnement, au niveau du plancher (50), du deuxième tronçon (58.2) du rail longitudinal (52),
- une étape de montage des première et deuxième demi-éclisses (64, 68) sur les premier et deuxième tronçons (58.1, 58.2) du rail longitudinal (52),
- si besoin une étape d'ajustement du positionnement par calage des premier et deuxième tronçons (58.1, 58.2) du rail longitudinal (52) par rapport à la poutre transversale (54), verticalement et/ou transversalement,
- une étape de perçage d'un orifice traversant pour chacun des premiers et deuxièmes éléments de fixation (70, 80),
- une étape de mise en place des premiers et deuxièmes éléments de fixation (70, 80) de manière à relier les première et deuxième demi-éclisses (64, 68) ainsi que chaque équerre en L (76) du système de raccordement (60).
